Europäisches Patentamt

European Patent Office

Office européen des brevets

(11) Publication number: **0 084 195**
**B1**

(12) **EUROPEAN PATENT SPECIFICATION**

(45) Date of publication of patent specification: **03.07.85**

(51) Int. Cl.⁴: **H 04 N 9/04,** H 04 N 9/09

(21) Application number: **82201627.5**

(22) Date of filing: **20.12.82**

(54) **Method for the automatic set-up of a television camera and television camera suitable therefor, suitable memory and lens system, and suitable memory.**

(30) Priority: **30.12.81 NL 8105897**

(43) Date of publication of application:
**27.07.83 Bulletin 83/30**

(45) Publication of the grant of the patent:
**03.07.85 Bulletin 85/27**

(84) Designated Contracting States:
**DE FR GB**

(56) References cited:
US-A-3 381 084
US-A-4 285 004

(73) Proprietor: **N.V. Philips' Gloeilampenfabrieken**
**Groenewoudseweg 1**
**NL-5621 BA Eindhoven (NL)**

(72) Inventor: **Breimer, Hendrik**
**c/o INT. OCTROOIBUREAU B.V. Prof. Holstlaan 6**
**NL-5656 AA Eindhoven (NL)**
Inventor: **van Roessel, Frederik Johannes**
**c/o INT. OCTROOIBUREAU B.V. Prof. Holstlaan 6**
**NL-5656 AA Eindhoven (NL)**
Inventor: **Tienkamp, Engbert**
**c/o INT. OCTROOIBUREAU B.V. Prof. Holstlaan 6**
**NL-5656 AA Eindhoven (NL)**

(74) Representative: **Steenken, Jacob Eduard et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a method for the automatic setup of a television camera by means of a test pattern, the optical information originating from the test pattern being converted by a pick-up arrangement in the camera into electronic information which is compared in at least one microcomputer with a reference information, the difference information being converted as an error information into correction information which is stored in a camera memory, which correction information is extracted from the camera memory and used to correct the information supplied by the pick-up arrangement, resulting in an ultimately minimal error information, and to a television camera suitable therefore, to a suitable memory and lens system and to a suitable memory.

Such a method is disclosed in United States Patent 4,285,004 in which the test pattern present on a test chart is positioned in front of a colour television camera. The optical information originating from the test chart is applied *via* an optical path incorporating a lens system and a colour splitting prism to the pick-up arrangement which comprises three pick-up devices, each producing a colour signal as a video signal. After the setup scan correction signals are applied to two of the pick-up devices or to all three pickk-up devices as a result of which an optimum raster registration is obtained in the television picture on display. In addition, during the setup shading errors at black level and the maximum video value are corrected and a gamma correction is obtained by applying correction signals to video signal processing circuits.

In practice, setting-up a television camera by means of a test chart which is to be positioned at some distance in front of the camera is very troublesome for the camera operator. Positioning the test chart, which must always be at hand, in the proper position and under the proper illumination is time-consuming and annoying for the camera operator.

The invention has for its object to provide a camera setup method in which normal circumstances the camera operator does not require a test charge with a test pattern to be placed in front of the camera during the preparation for scene recording. According to the invention, a setup method which precedes the normal preparations to scene recording is therefore characterized in that the setup is effected in two separate steps in which an external and an internal test pattern are used separately, during the setup with the external test pattern this test pattern being present on a test chart in front of the camera and during the setup with the internal test pattern this internal test pattern being present in the camera in the optical path between a lens system of the camera and the pick-up arrangement, the separate setups with the external and internal test patterns being effected with a non-blocked optical path and a blocked optical path, respectively in which the lens system is incorporated, at least the correction information associated with the internal test pattern being stored in the camera memory, whereafter the correction information associated with the internal test pattern is subtracted from the correction information associated with the external test pattern and the resulting correction difference information which thus is associated as a correction information with at least the lens system is stored in a lens memory, the camera memory and lens memory together producing the correction information for the said correction with the minimal error information.

The described method achieves that of the setup effected in two steps, in normal circumstances the camera operator needs to effect in the preparations for scene recording only the setup by means of the internal test pattern contained in the camera. This internal test pattern may be arranged in the optical path between the (optically blocked) lens system and the camera pick-up arrangement in the form of a hingeable slide which is illuminated from a light source. Alternatively, this slide may be projected into the optical path by means of a mirror. Reference is made to the United States Patent No. 3,381,084. Prior to this, the camera supplier which supplies different lens systems for the camera has for example, effected for each lens system a separate setup by means of the external test pattern which is to be positioned in front of the camera. The difference between the correction information associated with the different lens systems and determined by means of the external test pattern, and the correction information associated with the internal test pattern is stored by the supplier in a like number of, for example digital lens memories. This results in each lens system having it own lens memory with correction information. For setting up the camera during the preparations to scene recording, the camera operator now only needs to place the lens memory associated with the lens system in the camera or to choose one of the incorporated memories, to block the optical path containing the lens system and thereafter can make the automatic setup operative by positioning the test pattern present in the camera in the illuminated optical path. When the setup is effected fully automatically, the camera operator needs only to operate one single knob at the camera.

The described method accomplishes a separation of functions, for each lens system a setup with the external and internal test patterns occurring non-recurrently and the associated lens memory being loaded with the correction difference information, thereafter during use of the camera only the internal test pattern in the camera being required for the setup. The non-recurrent loading of the memory associated with the lens system may be effected by the lens system supplier or by the camera operator himself instead of by the camera supplier. In addition, if so desired, the lens memory information may be refreshed at intervals so that also the occurrence of ageing phenomena in the lens system is corrected.

The invention will now be further described hereafter.

Upon loading of a, for example, digital memory which is to be associated with one of the lens systems, the correction information associated with the external test pattern provided on the test chart, to form the correction information associated with the lens system may be temporarily stored in a separate memory. This has the advantage that the loading of the lens memory need not to be effected simultaneously with the generation of the correction information associated with the test chart pattern. Because of the temporary storage the correction difference information can be formed at a desired, arbitrary moment by the microcomputer. Thereafter the said separate memory may be erased.

In addition to the fact that in the described method the said lens memory contains the correction information associated with (purely) the lens system, this memory may contain further correction information as regard errors in the blocked portion of the optical path in which the lens system is incorporated.

The use of the method in accordance with the invention provides a television camera which comprises the camera memory employed by the camera operator during?the setup operation, which is part of the preparations for scene recording, and the lens memory containing a correction information which is at least associated with the lens system used at that moment at the camera. When the camera is suitable for studio and outdoor recordings and the required lens systems have been supplied with the camera, the fact that a lens system with range extension features has a different characteristic than the same lens system without this feature is taken account of, it appears that eight lens memories for the storage of the different items of correction information is sufficient.

A memory and lens system based on the use of a method in accordance with the invention can be supplied to the user of the camera. After the lens system has been arranged at the camera and the lens memory with the correction information associated with the lens system has been arranged at the microcomputer or a choice between the incorporated memories has been made, the camera operator can perform the setup with the internal test pattern associated with the preparations for scene recordings.

In practice, the related lens systems and lens memories with correction information will be provided with identification features, either electronic features or non-electronic features.

The method results in a memory containing correction information which fits in with the associated lens system for a (for example colour) television camera. During recording the colour television camera operates, for example, with the green, red and blue light components of the light coming from a scene to be televised. The, for example, digital lens memory may contain correction information about, for example, geometry, registration or raster registration, shading distortion, optical focussing and the video signal. The geometry correction is either of the pin-cushion type or of the barrel type and may be characterized by one single coefficient in the digital memory. The optical focussing correction may be written in the memory with three coefficients. When the registration error is expressed as a dimension error in red and blue with respect to green, two coefficients are required for correction. The shading distortion can be corrected by means of, for example a horizontal and vertical, parabolic and sawtooth-shaped correction in red, green and blue, so that twelve coefficients are required in the lens memory. Higher order corrections result in more coefficients. For the video signal correction thoughts may go towards a red and blue amplifying and black level correction, which requires four coefficients.

With the described automatic setup by means of the external and internal test patterns, the setup which is to be effected non-recurrently or, in the event refreshing of the memory content is desired, is to be effected more than once by means of the external test chart pattern can optionally be done automatically or manually. With this setup the external and internal test patterns must be of identical constructions. When a television camera user buys a memory and lens system the lens memory of which has already been loaded, a different, internal test pattern may be used in the setup to be effected by the camera operator and which belongs to the normal preparations for scene recording.

The invention will now be further explained by way of non-limitative example with reference to the accompanying drawings in which:

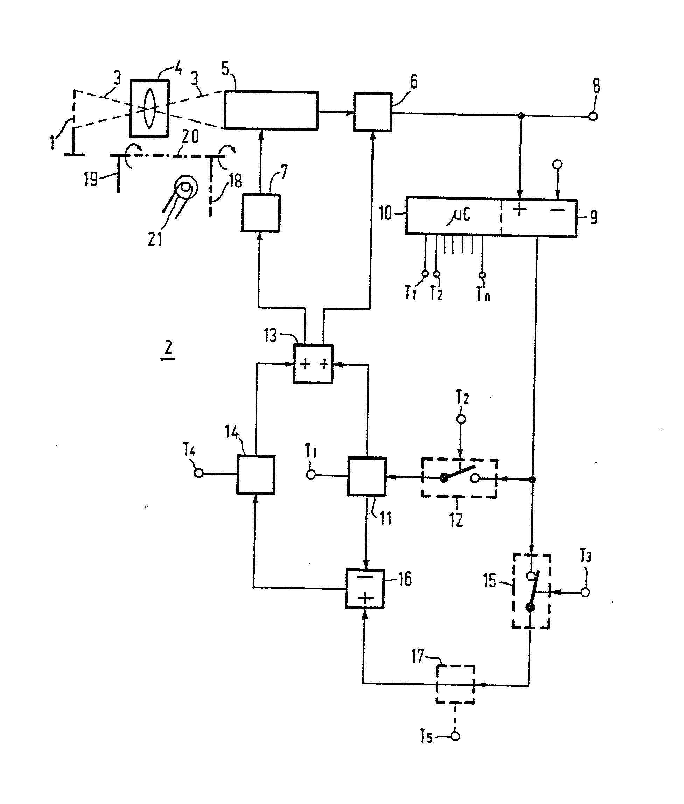

The Figure is a schematic circuit diagram of a camera in accordance with the invention.

In the Figure there is shown an external test pattern 1 present on a test chart which is positioned in front of a television camera 2. The optical information originating from the test chart is applied to a pick-up arrangement 5 via an optical path 3 incorporating a lens system 4. The pick-up arrangement 5 converts the optical information into electronic information which is applied to video processing circuit 6. The conversion is effected under the control of scan circuits 17. An output of the video processing circuit 6 is connected to an output 8 of the camera 2.

For an automatic setup of the camera 2 the output of the video processing circuit 6 is connected to a (+) input of a stage 9 having a (−) input to which reference information is applied, which stage 9 is combined with a microcomputer (µC) 10. Output/input terminals of the microcomputer 10 are denoted by T1, T2 to Tn. By means of the stage 9 and the microcomputer 10 the difference information present between the (+) and (−) inputs is converted as an error information into correction information at an output. The stage 9 applies the correction information to an input of a camera memory 11 through an on/off switch 12. The camera memory 11 has a control input/output connected to the terminal T1 of the microcomputer 10. A switching input of the switch 12 is connected to the output terminals T2 of the microcomputer 10. An output of the camera memory 11 conveying correction information is coupled to inputs of the video processing circuits 6 and the scan circuits 7. According to an aspect of the invention this coupling comprises an adding circuit 13. The adding circuit 13 has two (+) inputs connected to the output of the camera memory 11 and a lens memory 14, respectively. The output of the stage 9 with the correction information is coupled to an input of the lens memory 14 throughn an on/off switch 15 and a subtracting circuit 16. The switch 15 has a switching input connected to the terminal T3. The lens memory 14 has a control input/output connected to the terminal T4. The subtracting circuit 16 has a (+) input connected to the switch 15 and a (−) input connected to an output of the camera memory 11. As described, an additional separate memory 17 may be provided between the output of the stage 9 and the (+) input of the subtracting circuit 17, which has a control input/output connected to the terminal T5.

In order to obtain that the subtracting circuit 16 applies the described correction difference information to the lens memory 14, and internal test pattern 18 and an optical path blocking means 19 are provided in the camera 2. A (mechanical) coupling 20 is shown in the Figure. The internal test pattern 18 may be in the form of a hingeable slide which is illuminated from a light source 21. The blocking means 19 may alternatively be provided between the lens system 4 and said hingeable slide.

In the Figure, the switch 15 is shown in the closed state. During this state the information coming from the external test pattern 1 is processed in the camera 2 in the described way. Prior to this state the internal test pattern (18) was inserted in the optical path 3 behind the lens system 4, the optical path 3 being blocked by the optical path blocking means 19. In this prior state the switch 12 is closed. The result is that the setup method is effected in the described two steps.

## Claims

1. A method for the automatic setup of a television camera (2) by means of a test pattern (1, 18), the optical information originating from the test pattern being converted by a pick-up arrangement (5) in the camera into electronic information which is compared in at least one microcomputer (10) with a reference information, the difference information being converted as an error information into correction information which is stored in a camera memory (11), which correction information is extracted from the camera memory and used to correct the information supplied by the pick-up arrangement (5), resulting in an ultimately minimal error information, characterized in that the setup is effected in two separate steps in which an external (1) and an internal (18) test pattern are used separately, during the setup with the external test pattern (1) this test pattern being present on a test chart in front of the camera and during the setup with the internal test pattern (18) this internal test pattern being present in the camera in the optical path (3) between a lens system (4) of the camera and the pick-up arrangement (5), the separate setups with the external and internal test patterns being effected with a non-blocked (3) and a blocked (19) optical path, respectively in which the lens system is incorporated, at least the correction information associated with the internal test pattern (18) being stored in the camera memory (11), whereafter the correction information associated with the internal test pattern (18) is subtracted from the correcting information associated with the internal test pattern (1) and the resulting-correction difference information which thus is associated as a correction information with at least the lens system is stored in a lens memory (14), the camera memory (11) and the lens memory (14) together producing the correction information for the said correction with the minimal error information.

2. A method as claimed in Claim 1, characterized in that the correction information associated with the external test pattern, for forming the correction information associated with at least the lens system, is temporarily stored in a separate memory (17).

3. A television camera being setup in accordance with the method as claimed in Claim 1 or 2, comprising the camera memory (11) and the lens memory (14) containing the correction information belonging to at least the associated lens system (4) of the camera.

4. A memory and lens system suitable for use with a television camera as claimed in Claim 3, this memory (14) containing the correction information belonging to at least the associated len system (4).

## Patentansprüche

1. Verfahren zur automatischen Einstellung einer Fernsehkamera (2) mittels eines Bildmusters (1, 18), wobei die optische Information des Bildmusters von einem Aufnahmer (5) in der Kamera in elektronische Information umgesetzt wird, die in zumindest einem Mikrocomputer (10) mit Referenzinformation verglichen, die Differenzinformation als Fehlinformation in Korrekturinformation umgesetzt wird, die in einen Kameraspeicher (11) eingeschrieben, danach aus dem Kameraspeicher (11) ausgelesen und zur Korrektur der vom Aufnehmer (5) gelieferten Information benutzt wird, wodurch die Fehlinformation äusserst gering ist, dadurch gekennzeichnet, dass die Einstellung in zwei getrennten Schritten erfolgt, bei denen ein externes Bildmuster (1) und ein internes Bildmuster (18) getrennt verwendet werden, dass für die Dauer der Einstellung mit dem externen Bildmuster (1) dieses Bildmuster auf einer Bildvorlage vor der Kamera und für die Dauer der Einstellung mit dem internen Bildmuster (18) dieses interne Bildmuster in der Kamera im optischen Weg (3) zwischen einem Linsensystem (4) der Kamera und dem Aufnehmer (5) zur Verfügung stehen, dass die getrennten Einstellungen mit den externen und internen Bildmustern über einen nicht gesperrten (3) und einen gesperrten (19) optischen Weg erfolgen, in die das Linsensystem aufgenommen ist, dass zumindest die zum internen Bildmuster (18) gehörende Korrekturinformation in den Kameraspeicher (11) geschrieben und anschliessend von der zum externen Bildmuster (1) gehörenden Korrekturinformation subtrahiert wird, und die daraus entstehenden Korrekturdifferenzinformation, die also als Korrekturinformation dem Linsensystem zugeordnet wird, in einem Linsenspeicher (14) geschrieben wird und dass der Kameraspeicher (11) und der Linsenspeicher (14) zusammen die Korrekturinformation für die betreffende Korrektur mit minimaler Fehlinformation erzeugen.

2. Verfahren nach Anspruch 1, dadurch gekennzeichnet, dass die zum externen Bildmuster gehörende Korrekturinformation zur Bildung der zumindest zum Linsensystem gehörenden Korrekturinformation in einen getrennten Speicher (17) zwischengespeichert wird.

3. Fernsehkamera zum Einstellen mit dem Verfahren nach Anspruch 1 oder 2, mit dem Kameraspeicher (11) und dem Linsenspeicher (14), welche die zumindest zum zugeordneten Linsensystem (4) der Kamera gehörende Korrekturinformation enthalten.

4. Speicher- und Linsensystem zur geeigneten Verwendung mit einer Fernsehkamera nach Anspruch 3, wobei dieser Speicher (14) die zumindest zum zugeordneten Linsensystem (4) gehörende Korrekturinformation enthält.

**Revendications**

1. Procédé pour le réglage automatique d'une caméra de télévision (2) à l'aide d'une mire (1, 18), l'information optique provenant de la mire étant convertie par un système de prise de vues (5) dans la caméra en information électronique, qui est comparée dans au moins un microordinateur (10) avec une information de référence, l'information différentielle étant convertie comme information de défaut en information de correction, qui est stockée dans une mémoire de caméra (11), cette information de correction étant prélevée sur la mémoire de caméra et utilisée pour corriger l'information délivrée par le système de prise de vues (5), ce qui aboutit à une information de défaut finalement minimale, caractérisé en ce que le réglage s'effectue en deux étapes séparées pour lesquelles une mire externe (1) et une mire interne (18) sont utilisées séparément, que, lors du réglage avec la mire externe (1), cette mire est présente sur une carte à mire en face de la caméra et lors du réglage avec la mire interne (18), cette mire est présente dans la caméra dans le trajet optique (3) entre un système de lentilles (4) dans la caméra et le système de prise de vues (5), les étapes séparées avec les mires externe et interne étant effectuées avec un trajet optique non bloqué (3) et un trajet optique bloqué (19) respectivement, dans lesquels est incorporé le système de lentilles, au moins l'information de correction appartenant à la mire interne (18) étant stockée dans la mémoire de caméra (11), après quoi l'information de correction appartenant à la mire interne (18) est soustraite de l'information de correction appartenant à la mire externe (1) et l'information de différence de correction résultante, qui appartient ainsi comme information de correction à au moins le système de lentilles, est stockée dans une mémoire de lentilles (14), la mémoire de caméra (11) et la mémoire de lentilles (14) fournissant ensemble l'information de correction pour ladite correction avec l'information de défaut minimale.

2. Procédé selon la revendication 1, caractérisé en ce que l'information de correction appartenant à la mire externe pour la formation de l'information de correction appartenant à au moins le système de lentilles est temporairement stockée dans une mémoire séparée (17).

3. Caméra de télévision ayant subi un réglage conforme au procédé selon la revendication 1 ou 2, comportant la mémoire de caméra (11) et la mémoire de lentille (14) contenant de l'information de correction appartenant à au moins le système de lentilles correspondant (4), de la caméra.

4. Système de mémoire et de lentilles convenant à une caméra de télévision selon la revendication 3, cette mémoire (14) contenant de l'information de correction appartenant à au moins le système de lentilles correspondant (4).